# EUROPÄISCHE PATENTSCHRIFT

(11) **EP 3 402 928 B1**
(45) Veröffentlichungstag und Bekanntmachung des Hinweises auf die Patenterteilung: **13.11.2019**
(21) Anmeldenummer: 17700637.6
(22) Anmeldetag: 10.01.2017
(51) Int. Cl.: E01C 19/48, E01C 19/00

(54) **STRASSENFERTIGER MIT PROJEKTOR ALS NAVIGATIONSHILFE**
PAVING MACHINE WITH PROJECTOR AS NAVIGATION AID
FINISSEUR DOTÉ D'UN PROJECTEUR EN TANT QU'AIDE À LA NAVIGATION

(30) Priorität: 12.01.2016 DE 202016100093 U
(43) Veröffentlichungstag der Anmeldung: 21.11.2018
(60) Teilanmeldung: 19189973.1
(73) Patentinhaber: Joseph Vögele AG, 67075 Ludwigshafen (DE)
(72) Erfinder: WEBER, Stefan, 67127 Rödersheim-Gronau (DE); ERDTMANN, Bernhard, 68309 Mannheim (DE)
(74) Vertreter: Grünecker Patent- und Rechtsanwälte PartG mbB
(86) Internationale Anmeldenummer: PCT/EP2017/050392
(87) Internationale Veröffentlichungsnummer: WO 2017/121717

(56) Entgegenhaltungen:
- EP-A1- 1 990 472
- DE-A1- 10 060 903
- US-A- 5 546 123
- US-A1- 2013 082 161

## Beschreibung

Die vorliegende Erfindung betrifft einen Straßenfertiger gemäß dem Anspruch 1.

Bei bekannten Straßenfertigern der Vögele AG, beispielsweise am Fertiger des Typs Super 700, ist an dem Fahrwerk ein mechanischer Zeiger als Navigationshilfe befestigt. Der mechanische Zeiger umfasst eine Halterung, die seitlich des Raupenfertigers eine Pendelkette bzw. einen Flachstahl über dem Untergrund trägt. Während der Einbaufahrt kann der Fahrer den Straßenfertiger derart lenken, dass die Pendelkette bzw. der Flachstahl entlang der Einbaustrecke an oder zumindest sehr nahe an einer zur Vorgabe einer gewünschten Einbaurichtung gespannten Referenzschnur, entlang des Bordsteins oder einer Fräskante geführt wird.

Es hat sich allerdings gezeigt, dass der mechanische Richtungsanzieger durch die mechanischen Eigenschaften eine begrenzte Einsatzmöglichkeit bietet bzw. einen begrenzten Arbeitsradius hat. Desweiteren ist der übliche Arbeitsbereich am Straßenfertiger mit Störgeometrien versehen, z.B. Bunkerwänden, Abdruckbalken, Fahrbereich des LKW. Als Hauptnachteil des mechanischen Zeigers gilt, dass dieser durch äußere Einwirkung verstellt werden kann, z.B. hochstehende Kanaldeckel, fahrende LKW's, Personal welches dagegen stößt.

Der seitlich auskragende mechanische Zeiger kann ebenfalls von einem Fahrer eines vorrausfahrenden LKWs für einen Materialübergabevorgang verwendet werden, um den LKW rückwärts mittig an den Gutbunker des Fertigers heranzufahren. Problematisch wird der Einsatz des mechanischen Zeigers aber spätestens dann, wenn nachts mit dem Straßenfertiger gearbeitet wird, weil der Fahrer bei Dunkelheit vom Bedienstand aus die Pendelkette bzw. der Flachstahl nicht mehr gut erkennen kann.

Hinzu kommt, dass sich der Fahrer vom Bedienstand aus leicht darüber täuschen kann, wie nahe die Pendelkette bzw. den Flachstahl tatsächlich an der Richtschnur geführt wird. Oftmals können erst größere Abstände bzw. Abweichungen zwischen der Pendelkette bzw. dem Flachstahl und der Richtschnur vom Bedienstand aus wahrgenommen werden. Dies führt allerdings dazu, dass erst recht spät einem unerwünschten Einbauverlauf entgegen gelenkt wird, wodurch es zu Einbaufehlern kommen kann und gegebenenfalls aufwendig nachgebessert werden muss.

US 2003/0226290 A1 offenbart in Fig. 8 einen Straßenfertiger mit einem Laserscanner, der einen Laserstrahl in Einbaurichtung gesehen hinter die Einbaubohle auf die Oberfläche einer neu eingebauten Schicht richtet, um dort einen Bildbereich zu beleuchten, der von einer Kamera des US 5,546,123 A offenbart einen Straßenfertiger, der hinsichtlich einer entlang der Einbaurichtung auf dem Untergrund vorgesehenen Referenzlinie gelenkt werden kann. Dafür ist am Straßenfertiger eine Lasereinheit vorgesehen, deren Laserprojizierung quer zur Einbaurichtung, d. h. quer zur Erstreckung der Referenzlinie, auf die Referenzlinie fällt, wobei die Laserprojizierung auf der Referenzlinie von einer CCD-Kamera erfasst wird und auf einem Display des Straßenfertigers für dessen Fahrer anzeigbar ist.

DE 100 60 903 A1 offenbart eine Laserregeleinrichtung für einen Straßenfertiger, auf Basis deren Abstandsmessungen zum Untergrund eine automatische Höhenverstellung der Einbaubohle des Straßenfertigers durchführbar ist.

EP 1 990 472 A1 offenbart eine Seitwärtsdrift-Korrektureinrichtung für eine mobile Fertigungsmaschine, umfassend eine Sensoreinheit zum Erfassen einer Untergrundstruktur, relativ zu welcher sich die Fertigungsmaschine bewegt.

Aufgabe der Erfindung ist es, einen Straßenfertiger zur Verfügung zu stellen, der durch den Einsatz einfacher, konstruktiver technischer Mittel besser entlang einer gewünschten Einbaustrecke navigierbar ist.

Diese Aufgabe wird gelöst durch einen Straßenfertiger gemäß dem Anspruch 1. Verbesserte Weiterbildungen der Erfindung sind in den Unteransprüchen angegeben.

Der erfindungsgemäße Straßenfertiger umfasst einen Gutbunker zur Aufnahme eines Einbaumaterials, ein Chassis, einen Bedienstand, der in Einbaurichtung gesehen hinter dem Gutbunker angeordnet ist, eine nivellierbare Einbaubohle zum Verbau des Einbaumaterials auf einem Untergrund, eine Materialfördereinheit, die dazu konfiguriert ist, das Einbaumaterial vom Gutbunker zur Einbaubohle zu transportieren sowie mindestens einen optischen Projektor.

Bei der Erfindung ist der optische Projektor dazu konfiguriert, auf dem Untergrund in Einbaurichtung gesehen seitlich und/oder vor das Chassis des Straßenfertigers mindestens eine Projizierung im sichtbaren Spektrum (d.h. im Wellenlängenbereich von ca. 400 bis 800 nm) zu erzeugen, wobei die Projizierung vom Bedienstand aus in Einbaurichtung gesehen von einem Fahrer des Straßenfertigers einsehbar ist.

Bei der Erfindung bildet die optische Projizierung auf dem Untergrund eine Steuer- bzw. Navigationshilfe, mittels welcher insbesondere dem Fahrer auf dem Bedienstand des Straßenfertigers anzeigbar ist, wie der Straßenfertiger für den Einbaubetrieb ausgerichtet ist. Die Projizierung kann bei sämtlichen Wetterbedingungen sowohl tagsüber, als auch bei Nachtarbeiten gut als Navigationshilfe zum Lenken des Straßenfertigers entlang einer gewünschten Einbaurichtung eingesetzt werden.

Anhand der optischen Projizierung kann der Fahrer schnell erkennen, ob er den Straßenfertiger entlang der vorbestimmten Einbaurichtung lenkt oder nicht. Deshalb kann schnell reagiert werden, wenn der Straßenfertiger von der vorbestimmten Einbaurichtung abkommt.

Bei der Erfindung wird der Untergrund als Projektionsfläche genutzt, auf welchem der Straßenfertiger gelenkt wird. Gewöhnlicherweise ist der Untergrund vorbearbeitet, beispielsweise eingeebnet und/oder vorverdichtet, um darauf mittels des Straßenfertigers eine neue Einbauschicht zu verlegen. Der Untergrund als Projektionsfläche zeigt dem Fahrer die Projizierung derart deutlich an, dass der Fahrer vom Bedienstand aus gut nachverfolgen kann, wie der Straßenfertiger tatsächlich auf dem Untergrund ausgerichtet ist. Die Projizierung als solche ist aber auch für anderes Bedienpersonal auf der Baustelle hilfreich und kommt ebenfalls als Navigationshilfe für andere Baustellenfahrzeuge in Frage, beispielsweise einen Beschicker und/oder einen LKW, der Einbaugut in den Gutbunker des Straßenfertigers kippt.

Vorteilhaft ist es auch, dass die Projizierung auf dem Untergrund auch ohne eine gespannte Referenzschnur als brauchbare Navigierungshilfe für den Fahrer des Straßenfertigers einsetzbar ist. Insbesondere kann der Projektor als Navigationshilfe unterschiedliche gut sichtbare Projektsmuster, beispielsweise Linien, auf dem Untergrund abbilden. Hinsichtlich einer bekannten mechanisch geführten punktuellen Aufnahme der Position des Straßenfertigers mittels der Pendelkette bzw. des Flachstahls ist insbesondere eine optische Linienführung durch den Einsatz eines Linienlasers als Projektor hilfreich, damit das Bedienpersonal auf der Baustelle die aktuelle Position des Straßenfertigers gut beobachten kann. Dies wird vor allem später im Zusammenhang mit den Erläuterungen zu den Figuren gezeigt.

Der Projektor kann an unterschiedlichen Stellen am Straßenfertiger befestigt sein. Vorzugsweise ist der Projektor am Chassis, an einer Schubvorrichtung, am Bedienstand, an einem Dachaufbau des Bedienstandes, an einem Schutzdach, an einem Ausziehdach, an einem Rückspiegel, auf einer Motorhaube, in oder an einer Einweiseampel, d.h. einer Anzeigevorrichtung für den Materialübergabevorgang, an einem Seitenschieber und/oder an der Einbaubohle des Straßenfertigers angeordnet. Gegenüber dem bekannten mechanischen Zeiger kann der bei der Erfindung eingesetzte optische Projektor an viel mehr Stellen des Straßenfertigers befestigt sein. Insbesondere kann der Projektor derart am Straßenfertiger montiert werden, dass eine Kollision des Projektors mit beweglichen Baugruppen des Straßenfertigers, beispielsweise mit Bunkerwänden, einem Abdruckbalken, Hydraulikzylindern, Raupenketten und/oder einem Vorabstreifer, vermieden werden kann. Im Gegensatz zur Erfindung ist der bekannte mechanische Zeiger hinsichtlich der Anbringung am Straßenfertiger darauf beschränkt, nicht weit entfernt vom Untergrund, üblicherweise am Andruckbalken oder am Fahrwerk des Raupenfertigers, befestigt zu sein, damit die Pendelkette bzw. der Flachstahl kurz ausgebildet sein kann, um nicht zu schwer zu sein. Allerdings musste der bekannte mechanische Zeiger für Umsetz- bzw. Transportfahrten des Raupenfertigers vom Andruckbalken oder vom Chassis abmontiert werden. Es kann vorkommen, dass das Baustellenpersonal über den am Boden auskragenden mechanischen Zeiger stolpert und sich verletzt.

Der Projektor kann für seinen Einsatzzweck, d.h. zur Erzeugung einer Projizierung auf dem Untergrund, vielerorts am Straßenfertiger zu befestigen sein. Insbesondere kann der Projektor für Umsetz- und Transportfahrten an seinem Einsatzort am Straßenfertiger verbleiben, sofern er nicht in unmittelbarer Nähe zum Untergrund positioniert ist. Selbst wenn der optische Projektor im Bereich des Andruckbalkens bzw. des Fahrwerks des Straßenfertigers befestigt ist, kann er vorzugsweise für den Transport des Straßenfertigers derart in eine Ruhestellung eingefahren werden, dass er den Transport bzw. das Umsetzen des Straßenfertigers nicht stört.

Vorstellbar wäre es auch, dass die Einbaubohle eine Ausziehbohle mit seitlich verstellbaren Ausziehteilen ist, wobei der Projektor an einem Ausziehteil befestigt ist. Vom Ausziehteil aus kann der Projektor hervorragend auf den Untergrund seitlich des Chassis des Straßenfertigers, d.h. in Einbaurichtung gesehen vor die Einbaubohle gerichtet werden, um an beliebiger Stelle seitlich des Chassis die Projizierung auf dem Untergrund abzubilden. Eine zusätzliche auskragende Halterung ist dafür nicht notwendig.

Zur Anbringung des Projektors käme insbesondere ein Seitenschieber der Einbaubohle, insbesondere ein Seitenschieber eines Ausziehteils einer Ausziehbohle in Frage, von welchem aus die Projizierung gut auf den Untergrund seitlich des Chassis des Straßenfertigers herstellbar ist.

Für den Einsatz auf der Baustelle ist der Projektor erfindungsgemäß manuell und/oder automatisch ausrichtbar, um die Projizierung bezüglich einer gewünschten Referenz einzustellen. Damit kann der Fahrer bei Arbeitsbeginn den Straßenfertiger entsprechend der vorbestimmten Einbaurichtung ausrichten und dann den Projektor so einstellen und justieren, dass die Projizierung auf die Referenz fällt.

Als Referenz käme in einer nicht zur Erfindung gehörenden Ausführung der Einsatz einer entlang der Einbaustrecke gespannten Richtschnur in Frage, wobei sich die Erfindung auch ohne den Einsatz einer solchen Richtschnur bewährt hat. Vorstellbar wäre es auch, dass als Referenz eine äußere Kante einer bereits daneben ausgelegten kalten oder heißen Einbaubahn, eine Kante der Untergrundschicht und/oder eine Spur im Untergrund, worauf der Straßenfertiger fährt, verwendbar ist.

Möglich ist es auch, dass die Projizierung eine andere Projizierung als Referenz verwendet, d.h. zu einer anderen Projizierung ausrichtbar ist und gegebenenfalls zumindest teilweise mit dieser zusammenfällt. Diese nicht erfindungsgemäße Ausführung könnte dann vorteilhaft sein, wenn mehrere Straßenfertiger in Einbaurichtung gesehen versetzt nebeneinander "heiße Bahn an heiße Bahn" einbauen. Dabei könnte es sein, dass der äußerste Straßenfertiger als Referenz eine gespannte Referenzschnur zum Einbau verwendet und für den anderen daneben, auf der anderen Seite einbauenden Straßenfertiger eine Projizierung als Referenz auf dem Untergrund abbildet, an welcher sich dieser Straßenfertiger orientieren kann. Dieses Prinzip der mittelbaren Referenzübergabe lässt sich auf beliebig viele Straßenfertiger ausbauen.

Erfindungsgemäß jedoch ist die Referenz ein Seitenschieber der Einbaubohle, wobei die Projizierung eine Führungslinie ist, die mit dem Seitenschieber in Einbaurichtung fluchtet. Dabei gilt, je länger die Führungslinie vom Seitenschieber aus in Fahrtrichtung gesehen auf den Untergrund projiziert wird, desto einfacher kann der Fahrer vom Bedienstand aus eine Orientierung des Straßenfertigers entlang einer vorgegebenen Einbaustrecke einschätzen. Die Führungslinie bietet somit für den Fahrer des Straßenfertigers eine visuelle Navigierungshilfe, um den Straßenfertiger entlang einer gewünschten Einbaustrecke zu navigieren. Da der Seitenschieber im Wesentlichen das Maß für die Einbaubreite des neuen Straßenbelags festlegt, kann erfindungsgemäß die Führungslinie als visuelle Verlängerung des Seitenschiebers dafür benutzt werden, dem Fahrer des Straßenfertigers anzuzeigen, wohin die neue Fahrbahn verlegt wird, wenn er die Fahrtrichtung beibehält. Somit kann der Fahrer anhand der projizierten Führungslinie schnell erkennen, ob er der aktuellen Fahrtrichtung des Straßenfertigers entgegensteuern muss oder nicht.

Vorteilhaft wäre es auch, wenn der Straßenfertiger eine Steuereinrichtung umfasst, die mit dem Projektor sowie mit einer Erfassungseinheit zur Detektion der Einbaubreite funktional verbunden ist sowie dazu konfiguriert ist, die Projizierung automatisch und synchron zur Einbaubreite derart zu verstellen, dass die Projizierung fluchtend zum Seitenschieber eingestellt bleibt. Alternativ oder zusätzlich kann der Fahrer auch manuell eine Einstellung am Projektor und/oder an einem Bedienpult des Straßenfertiger vornehmen, um die Projizierung dementsprechend anzupassen. Gemäß einer anderen raffinierten Ausführungsform umfasst der Straßenfertiger auf dem Bedienstand einen quer zur Einbaurichtung verschiebbar gelagerten Fahrersitz, wobei der Projektor an einem Schutzdach des Straßenfertigers angeordnet ist und entlang einer am Schutzdach ausgebildeten Führungsbahn manuell und/oder automatisch oberhalb einer Position des Fahrersitzes positionierbar ist. Vom Projektor aus kann die Projizierung in Einbaurichtung gesehen, vor dem Fahrer und dem Gutbunker auf dem Untergrund abgebildet werden. Bei dieser Ausführungsform wandert somit die Projizierung auf dem Untergrund gemäß der Ausrichtung des Fahrersitzes auf dem Straßenfertiger mit. Die Projizierung bleibt daher für den Fahrer unabhängig von der Positionierung seines Fahrersitzes stets gut einsehbar.

Vorzugsweise umfasst der Projektor als Lichtquelle mindestens einen Linienlaser und/oder einen Kreuzlinienlaser. Damit lässt sich die Projizierung besonders klar und deutlich auf dem Untergrund herstellen. Alternativ kann der Projektor auch zum Erzeugen der Projizierung eine LED-Einheit, eine Lichteinheit mit Fokussierlinse und/oder eine Lichteinheit einer mit zu projizierenden Markierung umfassen. Insbesondere mittels des Linienlasers kann mindestens eine in der Länge variierbare Führungslinie als Projizierung auf dem Untergrund abgebildet werden.

Vorzugsweise ist der Projektor als gepulste Lichtquelle ausgebildet, wobei es sich vornehmlich um einen Pulslaser handelt. Insbesondere kann die Dauer der Laserpulse und/oder die Dauer der Unterbrechungen zwischen den Laserpulsen am Projektor direkt und/oder vom Bedienstand des Straßenfertigers aus einstellbar sein. Besonders gut lässt sich der Pulslaser als Navigationshilfe dann einsetzen, wenn die Laserpulse und/oder die Unterbrechungen dazwischen automatisch in Abhängigkeit einer Geschwindigkeit des Straßenfertigers anpassbar sind. Vorzugsweise ist bei Verwendung eines Lasers als Lichtquelle derselbe als Laser bis zur Geräteklasse 2 gemäß DIN EN 60825-1 ausgebildet, um augensicher für das Bedienpersonal zu sein.

Gemäß einer bevorzugten Variante ist die Intensität des Lichts der Lichtquelle einstellbar. Vorzugsweise ist die Intensität des Lichts zur Erzeugung der Projizierung auf dem Untergrund entsprechend der Höhenposition des Projektors, mindestens eines Einbauparameters des Straßenfertigers und/oder entsprechend einer Witterungsbedingung automatisch einstellbar, ohne dabei in einen Strahlungsbereich zu geraten, der für das menschliche Auge nicht mehr augensicher ist.

Vorteilhaft ist es, wenn der Projektor dazu ausgebildet ist, unterschiedliche Projizierungsmuster (z.B. Linien, Kreuzlinien und/oder parallele Linien) auf dem Untergrund abbilden kann. Eine Variante sieht vor, dass der Fahrer mittels eines Bedienpults auf dem Bedienstand unterschiedliche Funktionen des Projektors ansteuern kann, insbesondere dessen Projizierungsmuster, dessen Ausrichtung, die Farbe der Projizierung und/oder die Intensität der Projizierung.

Vorzugsweise ist der Projektor dazu konfiguriert, als Projizierung ein lineares Richtungsfeld auf dem Untergrund vor dem Gutbunker zu erzeugen. Ein derartiges Richtungsfeld könnte vom Fahrer als visuell flächige Verlängerung einer horizontalen Projektionsfläche des Straßenfertigers benutzt werden, um die Ausrichtung des Straßenfertigers besser einschätzen zu können. Eine derartige Projizierung könnte auch vorteilhaft für einen Beschickungs- und/oder Materialübergabevorgang eingesetzt werden.

Vorzugsweise ist der Projektor dazu konfiguriert, eine Breite des Richtungsfelds manuell und/oder automatisch anzupassen. Dies könnte beispielsweise in Anpassung an eine Einbaubreite der Einbaubohle geschehen. Die Breite des Richtungsfelds könnte somit an den Einsatz unterschiedlicher Bohlentypen angepasst werden.

Besonders hilfreich für den Fahrer des Straßenfertigers ist es, wenn der Straßenfertiger eine Displayeinheit umfasst, die dazu konfiguriert ist, eine horizontale Projektion des Straßenfertigers, einschließlich der Projizierung relativ zu einer Referenz und/oder einer Zielvorgabe anzuzeigen. Dafür wäre insbesondere eine Fadenkreuzdarstellung verwendbar. Somit behält der Fahrer einen Überblick darüber, in welcher Richtung sich der Straßenfertiger bezüglich der Referenz bewegt.

Besonders gut lässt sich der Straßenfertiger dann navigieren, wenn der Straßenfertiger auf jeder Seite einen Projektor aufweist. Es können dann auf beiden Seiten des Chassis Projizierungen auf dem Untergrund dargestellt werden.

Vorzugsweise ist der Projektor bei einem Wechsel zwischen einem Einbau- und einem Transport- und/oder Umsetzmodus des Straßenfertigers automatisch an- und ausschaltbar. Das An- und Ausschalten des Projektors ließe sich insbesondere anhand eines spezifischen Betriebsparameters des Straßenfertigers triggern, beispielsweise anhand vom Einbau- oder Transportmodus, einer Tamperdrehzahl, Materialförderung AN/AUS, Bohlenheizung AN/AUS, usw.

Vorteilhaft wäre es auch, wenn der Projektor lösbar am Straßenfertiger befestigt ist. Der Projektor könnte somit über Nacht, während der Straßenfertiger auf der Baustelle verbleibt, von diesem entfernt werden, um zu verhindern, dass er gestohlen wird. Als lösbares Befestigungsmittel könnte der Projektor insbesondere einen Bajonettverschluss, eine Schraubenverbindung und/oder eine Magnetverbindung aufweisen.

Gemäß einer anderen Ausführungsvariante der Erfindung ist eine Farbe der Projizierung manuell und/oder automatisch einstellbar. Bei starker Sonneneinstrahlung wäre ein grünes Licht von Vorteil, damit die Projizierung gut erkennbar für den Fahrer des Straßenfertigers bleibt. Nachts könnte beispielsweise ein hellerer Farbton gewählt werden. Grundsätzlich könnte es möglich sein, am Projektor sämtliche sichtbaren Farbtöne für die Projizierung einzustellen. Vorzugsweise passt sich die Farbe und/oder Helligkeit der Projizierung automatisch an das verfügbare Tageslicht an.

Eine besonders gute und deutliche Projizierung ließe sich auch dadurch erreichen, wenn der Projektor derart auf den Untergrund ausgerichtet ist, dass die Projizierung unterhalb des Projektors ohne seitlichen Versatz zu diesem auf dem Untergrund abbildbar ist. Dies kann dadurch erreicht werden, indem der Projektor mittels einer Halterung am Straßenfertiger befestigt ist, wobei die Halterung den Projektor zur Seite hin auskragend oberhalb des Untergrund positioniert, so dass die Projizierung senkrecht nach unten erfolgt.

Zur Erläuterung der Erfindung werden im Folgenden Ausführungsbeispiele anhand der Figuren beschrieben. Es zeigen:
- Fig. 1: einen Straßenfertiger mit einer mechanischen Zeigervorrichtung gemäß dem Stand der Technik,
- Fig. 2: einen Straßenfertiger mit optischer Einbauführung entlang einer Einbaustrecke,
- Fig. 3-11: weitere Ausführungsformen eines Straßenfertigers,
- Fig. 12: eine Ausziehbohle mit optischen Projektoren an den Seitenschiebern, welche erfindungsgemäß eingestellt sind,
- Fig. 13: eine schematische Draufsicht eines Straßenfertigers mit Linienlaser,
- Fig. 14: eine schematische Draufsicht mehrerer Straßenfertiger im Einbaumodus Bahn an Bahn,
- Fig. 15: eine schematische Draufsicht eines Straßenfertigers mit Linienlaser für einen Beschickungsvorgang,
- Fig. 16: eine schematische Draufsicht eines Straßenfertigers mit anpassbarer optischer Linienführung,
- Fig. 17: eine schematische Draufsicht eines Straßenfertigers mit anpassbarem Laseranzeigefeld,
- Fig. 18: eine schematische Draufsicht eines erfindungsgemäßen Straßenfertigers mit optischen Projektoren an Ausziehteilen der Einbaubohle,
- Fig. 19: eine schematische Draufsicht eines Straßenfertigers mit optischem Laserrahmen und
- Fig. 20: eine schematische Darstellung einer Fadenkreuzführung am Straßenfertiger.

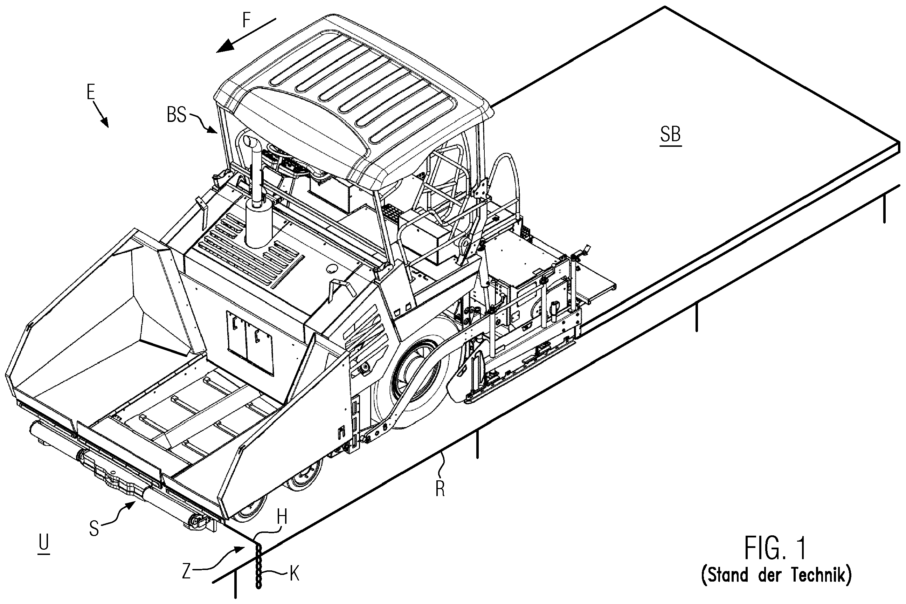

Fig. 1 zeigt einen Straßenfertiger E, der von einem Bediener entlang einer gespanntenn Richtschnur R gelenkt wird, um während der Einbaufahrt eine vorbestimmte Einbaurichtung F einzuhalten. Dafür umfasst der Straßenfertiger E eine mechanische Zeigervorrichtung Z, die in Einbaurichtung F gesehen vorne an einer Schubvorrichtung S befestigt ist und seitwärts zur Richtschnur R hinausragt. Die mechanische Zeigervorrichtung Z enthält eine Halterung H sowie eine daran am Ende befestigte Kette K.

Der Bediener des Straßenfertigers E lenkt während der Einbaufahrt den Straßenfertiger E derart, dass die Kette K dicht an der Richtschnur R entlanggeführt wird. Damit wird erreicht, dass der Straßenfertiger E auf einem Untergrund U, auf welchem sich der Straßenfertiger E fortbewegt, eine neue Straßenbelagschicht SB in der vorbestimmten Einbaurichtung F verlegt.

Für einen Fahrer des Straßenfertigers E ist es jedoch schwer, von einem Bedienstand BS aus zu beurteilen, ob die Kette K während der Einbaufahrt dicht entlang der Richtschnur R geführt wird oder nicht. Insbesondere hat sich bei schlechten Tageslichtbedingungen, z.B. bei Nacht oder Nebel, gezeigt, dass die mechanische Zeigervorrichtung Z nicht mehr hilfreich dafür ist, den Straßenfertiger E zielgenau entlang einer vorbestimmten Einbaurichtung F zu lenken. Dies hat in der Vergangenheit des Öfteren dazu geführt, dass bei einem Einsatz der mechanischen Zeigervorrichtung Z zusätzliches Bedienpersonal neben der mechanischen Zeigervorrichtung Z während der Einbaufahrt mitlief, um die Position der Kette K relativ zur Richtschnur R zu überprüfen. Sobald sich die Kette K von der Richtschnur R entfernte, warnte der mitlaufende Bediener den Fahrer des Straßenfertigers E davor, dass er den Straßenfertiger E nicht mehr entlang der vorbestimmten Einbaurichtung F lenkt und daher gegensteuern muss. Der Einsatz des seitlich am Straßenfertiger mitlaufenden Personals erhöht allerdings die Herstellungskosten und stellt gewissermaßen ein Sicherheitsrisiko dar.

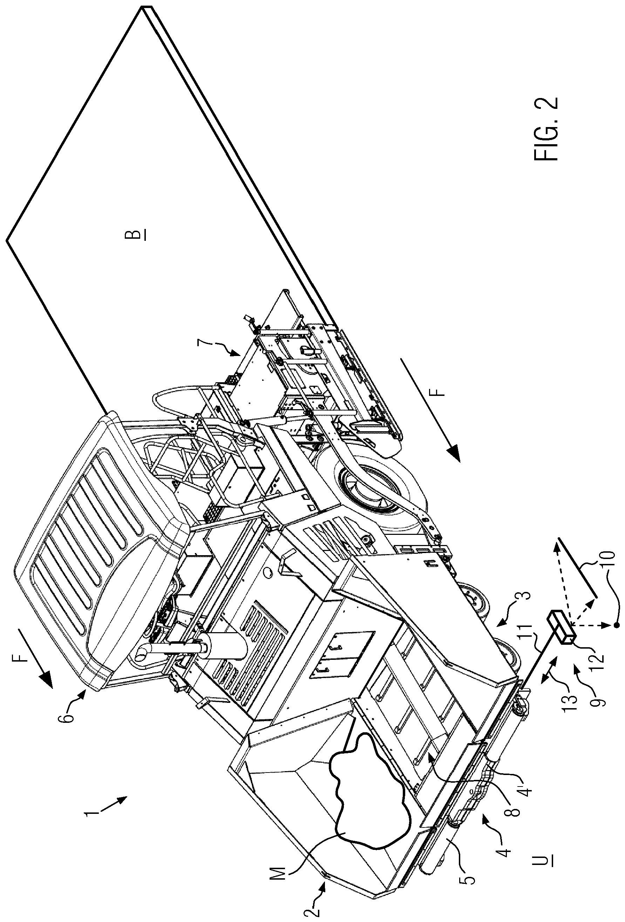

Fig. 2 zeigt einen Straßenfertiger 1, der entlang der gewünschten Einbaurichtung F einen neuen Straßenbelag B auf einem Untergrund U verbaut, auf welchem sich der Straßenfertiger 1 bewegt. In Einbaurichtung F gesehen umfasst der Straßenfertiger 1 vorne einen Gutbunker 2 zur Aufnahme eines Einbaumaterials M. Der Straßenfertiger 1 aus Fig. 2 umfasst weiter ein Chassis 3, welches ein Radfahrwerk umfasst. Alternativ könnte das Chassis 3 ein Raupenfahrwerk umfassen. Das Chassis 3 trägt vorne unterhalb des Gutbunkers 2 eine Schubvorrichtung 4 mit einem Andruckbalken 4'. Der Andruckbalken 4' trägt an seinen Enden Abdruckrollen 5, an welchen ein Materiallieferfahrzeug während eines Materialübergabevorgangs andocken kann.

Der Straßenfertiger 1 aus Fig. 2 umfasst weiter einen Bedienstand 6, von welchem aus ein Fahrer den Straßenfertiger 1 steuert, insbesondere entlang der Einbaurichtung F lenkt. Hinter dem Bedienstand 6 verfügt der Straßenfertiger 1 über eine Einbaubohle 7, die nivellierbar am Straßenfertiger 1 befestigt ist und dazu ausgebildet ist, den neuen Straßenbelag B entlang der Einbaurichtung F auf dem Untergrund U zu verbauen.

Fig. 2 zeigt ferner, dass der Straßenfertiger 1 eine Materialfördereinheit 8 umfasst. Die Materialfördereinheit 8 ist dazu konfiguriert, das Einbaumaterial M aus dem Gutbunker 2 unter dem Bedienstand 6 hindurch zur Einbaubohle 7 zu transportieren, um dieser das Einbaumaterial M für den Einbau in der neuen Straßenbelagschicht B zur Verfügung zu stellen.

Weiter zeigt Fig. 2, dass vorne an der Schubvorrichtung 4 ein optischer Projektor 9 befestigt ist. Der Projektor 9 ist dazu konfiguriert, auf dem Untergrund U in Einbaurichtung F gesehen seitlich und/oder vor das Chassis 3 des Straßenfertigers 1 mindestens eine für den Fahrer sichtbare Projizierung 10 im sichtbaren Spektrum zu erzeugen. Fig. 2 deutet an, dass die Projizierung 10 ein beliebiges optisches, für den Fahrer des Straßenfertigers 1 sichtbares Lichtbild auf dem Untergrund U sein kann, um eine Ausrichtung des Straßenfertigers 1, insbesondere hinsichtlich einer vorbestimmten Referenz, dem Fahrer des Straßenfertigers 1 anzuzeigen. Gemäß Fig. 2 kann die Projizierung 10 einen Lichtpunkt bzw. eine beleuchtete Linie auf dem Untergrund U sein. Im Folgenden werden aber auch noch andere Lichtbilder/Projizierungen 10 auf dem Untergrund U als Navigationshilfe erläutert.

Der Projektor 9 umfasst gemäß Fig. 2 eine Halterung 11, die mit einem Ende an der Schubvorrichtung 4 befestigt ist und an dem anderen, seitlich nach außen versetzten Ende eine Lichtquelle 12 trägt. Bei der Lichtquelle 12 kann es sich beispielsweise um eine LED-Einheit oder eine Lasereinheit, insbesondere um einen Laserpointer, einen Linienlaser oder einen Kreuzlinienlaser handeln.

In Fig. 2 zeigt ein Pfeil 13, dass der Projektor 9 quer zur Einbaurichtung F in unterschiedlichen Abständen zur Schubvorrichtung 4 verstellbar gelagert ist. Somit ist es möglich, die Lichtquelle 12 beispielsweise direkt oberhalb einer seitlich am Straßenfertiger vorgesehenen Referenz, beispielsweise einer Richtschnur R gemäß Figur 1, derart auszurichten, dass die Projizierung 10 vertikal auf die darunter liegende Referenz abgelichtet wird. Als Referenz käme beispielsweise eine unter der Lichtquelle 12 geführte Richtschnur R, eine Kante des Untergrunds U, eine Kante einer bereits daneben verbauten kalten oder heißen Straßenbelagschicht, eine Projizierung eines anderen Straßenfertigers oder Ähnliches in Frage.

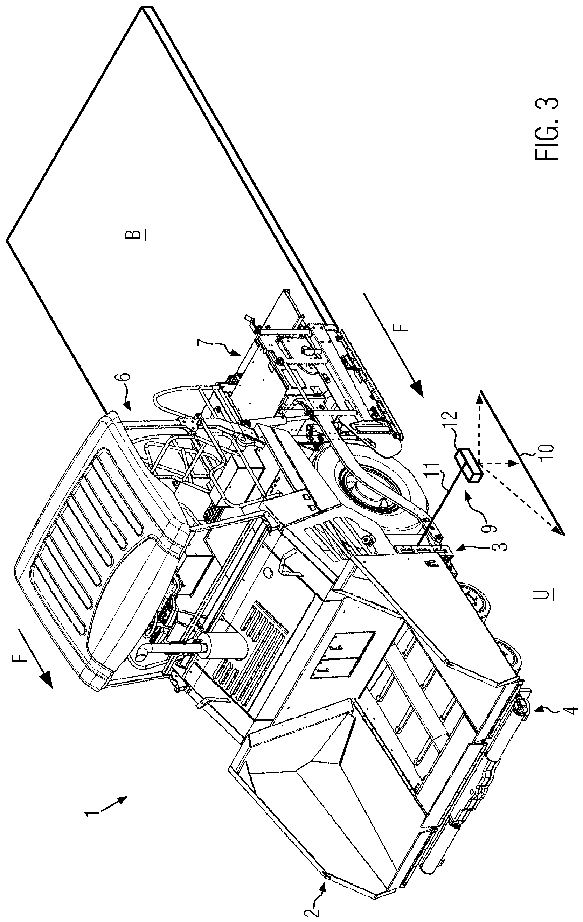

Fig. 3 zeigt den Straßenfertiger 1 gemäß einer anderen Ausführungsvariante. In Fig. 3 ist der Projektor 9 am Chassis 3 des Straßenfertigers 1 befestigt. Damit wird erreicht, dass der Projektor 9 näher zum Bedienstand 6 des Straßenfertigers 1 rückt, wodurch der Fahrer vom Bedienstand 6 aus gegebenenfalls besser die Projizierung 10 auf dem Untergrund U erkennen und nachverfolgen kann. Fig. 3 zeigt, dass die Lichtquelle 12 des Projektors 9 als Linienlaser ausgebildet ist, so dass die Projizierung 10 auf dem Untergrund U eine beleuchtete Führungslinie darstellt. Wie bei der Ausführungsvariante gemäß Fig. 2 kann die Halterung 11 zur Seite hin verstellbar am Chassis 3 befestigt sein, um die Lichtquelle 12 in einem gewünschten seitlichen Abstand zum Chassis 3 oberhalb des Untergrunds U anzuordnen.

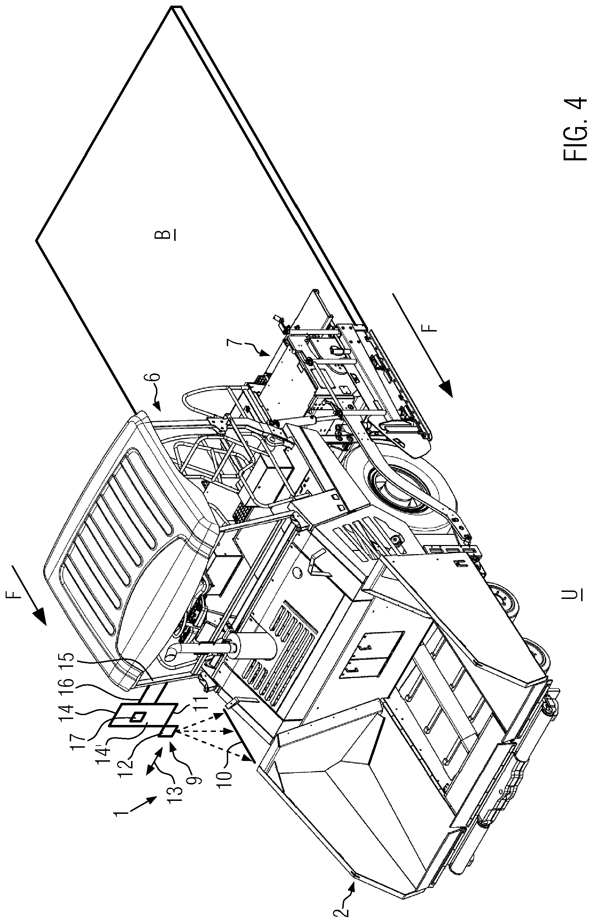

Fig. 4 zeigt eine weitere Ausführungsvariante des Straßenfertigers 1. Gemäß Fig. 4 ist der Projektor 9 an einem Rückspiegel 14 des Straßenfertigers 1 befestigt. Der Rückspiegel 14 ist an einem Dachaufbau 15 des Straßenfertigers 1 montiert. Die Lichtquelle 12 des Projektors 9 sendet Lichtstrahlen Richtung Untergrund U aus, um auf dem Untergrund die Projizierung 10 für einen Fahrer des Straßenfertigers 1 sichtbar darzustellen.

In den Ausführungsvarianten aus den Figuren 3 und 4 können die jeweiligen Projektoren 9 für eine Umsetzfahrt bzw. Transportfahrt aus deren Einsatzposition in eine Ruheposition versetzt werden. In der Ruheposition sind die Projektoren 9 dicht am Chassis 3 bzw. an der Schubvorrichtung 4 verstaut und/oder versperrt.

Gemäß Fig. 4 ist die Halterung 11 des Projektors an einer unteren Kante eines Rückspiegels 14 montiert, wobei mittels des Pfeils 13 angedeutet wird, dass die Lichtquelle 12 relativ zum Rückspiegel 14 nach außen hin quer zur Einbaurichtung F verstellbar gelagert ist. Die Projizierung 10 lässt sich daher an unterschiedlichen Stellen unterhalb auf dem Untergrund U abbilden. Vorstellbar wäre es auch, dass die Halterung 11 des Projektors 9 an eine Spiegelhalterung 16 gekoppelt ist, um den Projektor 9 gegebenenfalls an der Rückseite 14' des Rückspiegels 14 anzuordnen.

Fig. 4 zeigt auch, dass die entgegen der Einbaurichtung F gesehene Rückseite 14' des Rückspiegels 14 eine Anzeigeeinheit 17, die als Einweiseampel ausgebildet sein kann, aufweist. Mittels der Anzeigeeinheit 17 können einem vorausfahrenden Fahrzeug, beispielsweise einem Beschicker und/oder einem Materiallieferfahrzeug, Navigationssignale gegeben werden.

Das in Fig. 4 gezeigte multifunktionale Rückspiegel-Projektorsystem kann an beiden Seiten des Dachaufbaus 15 vorgesehen sein. Dadurch können links und rechts vom Straßenfertiger 1 entlang der Einbaurichtung F Projizierungen 10 auf dem Untergrund U dargestellt werden.

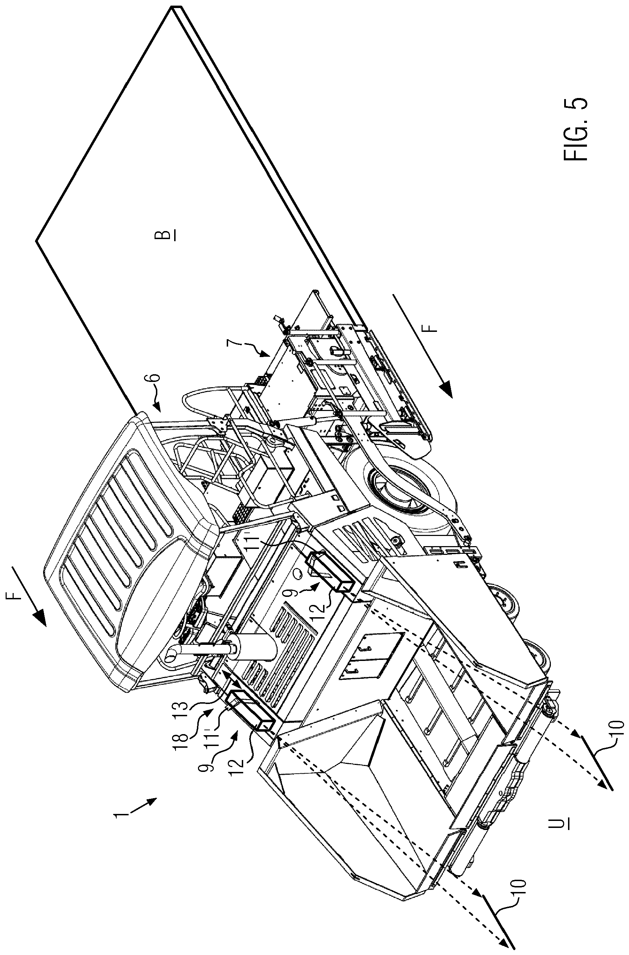

in Fig. 5 ist eine weitere Ausführungsvariante des Straßenfertigers 1 gezeigt. In Fig. 5 sind Projektoren 9 auf einer Motorhaube 18 des Straßenfertigers 1 befestigt. Die Motorhaube 18 ist vom Bedienstand 6 aus gesehen zum Untergrund U hin geneigt, so dass die darauf befestigten Projektoren 9 über den davor gelagerten Gutbunker 2 hinweg die Projizierungen 10 gut auf dem Untergrund U abbilden können. Außerdem bietet die Motorhaube 18 eine stabile Basis zur Befestigung der Projektoren 9.

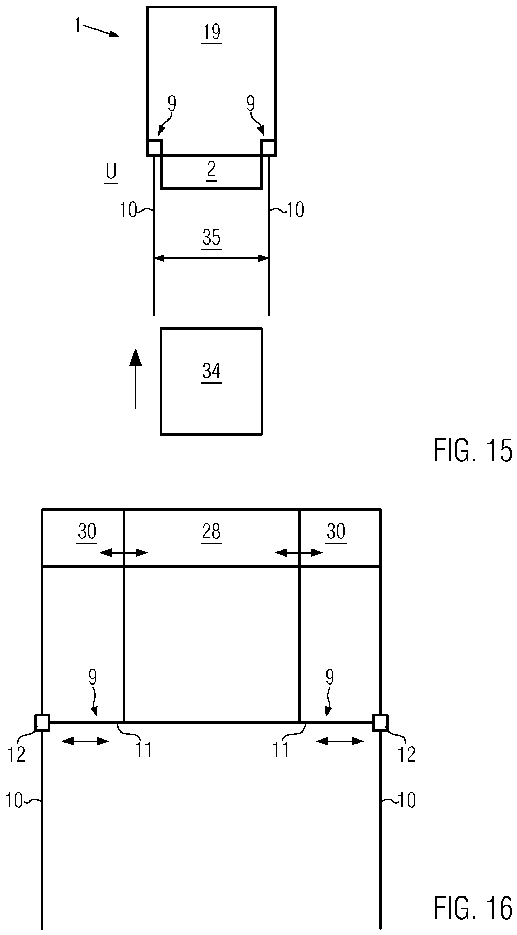

Die jeweiligen Lichtquellen 12 werden in Fig. 5 mittels einer U-förmig gebogenen Halterung 11' auf der Motorhaube 18 befestigt. Der Pfeil 13 deutet in Fig. 15 an, dass die Lichtquellen 12 relativ zu den jeweiligen Halterungen 11' verschiebbar auf der Motorhaube 18 gelagert sind. Die Befestigung der jeweiligen Projektoren 9 auf der Motorhube 18 bietet vor allen Dingen den Vorteil, dass die Lichtquellen 12 nicht durch eng am Straßenfertiger 1 vorbeifahrende Fahrzeuge beschädigt werden können. Diese Variante erlaubt es auch, dass die Projektoren 9 während Transportfahrten bzw. Umsetzfahrten auf der Motorhaube 18 des Straßenfertigers 1 verbleiben.

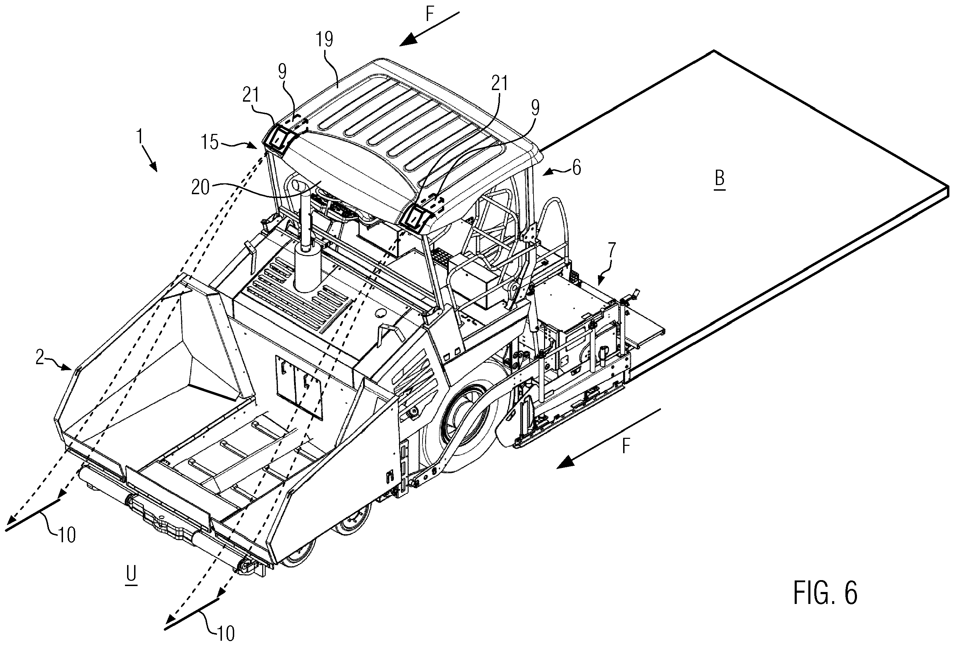

Fig. 6 zeigt eine weitere Ausführungsform des Straßenfertigers 1. Fig. 6 zeigt, dass der Dachaufbau 15 ein Schutzdach 19 trägt. In Fig. 6 sind die Projektoren 9 integral am Schutzdach 19 verbaut. Das Schutzdach 19 kann die Projektoren 9 vor Regen und Sonneneinstrahlung schützen. Die Projektoren 9 sind an äußeren Enden einer Vorderseite 20 des Schutzdachs 19 angeordnet. Die Vorderseite 20 ist in Einbaurichtung F gesehen nach unten zum Untergrund U hin geneigt, so dass die Projektoren 9, insbesondere deren Lichtquellen 12, derart an der nach vorne geneigten Fläche der Vorderseite 20 angeordnet sein können, dass die Projizierungen 10 gut auf dem Untergrund U darstellbar sind.

Bei der Ausführungsvariante aus Fig. 6 sind die jeweiligen Projektoren 9 aus der Vogelperspektive nicht zu sehen, weil sie vom Schutzdach 19 des Straßenfertigers 1 bedeckt sind, d.h. darin integral verbaut sind. Die Vorderseite 20 weist an ihren äußeren Enden für die Projektoren 9 lichtdurchlässige Fenster 21 auf, durch welche ausgesendete Lichtstrahlen der Projektoren 9 auf den Untergrund U gelangen.

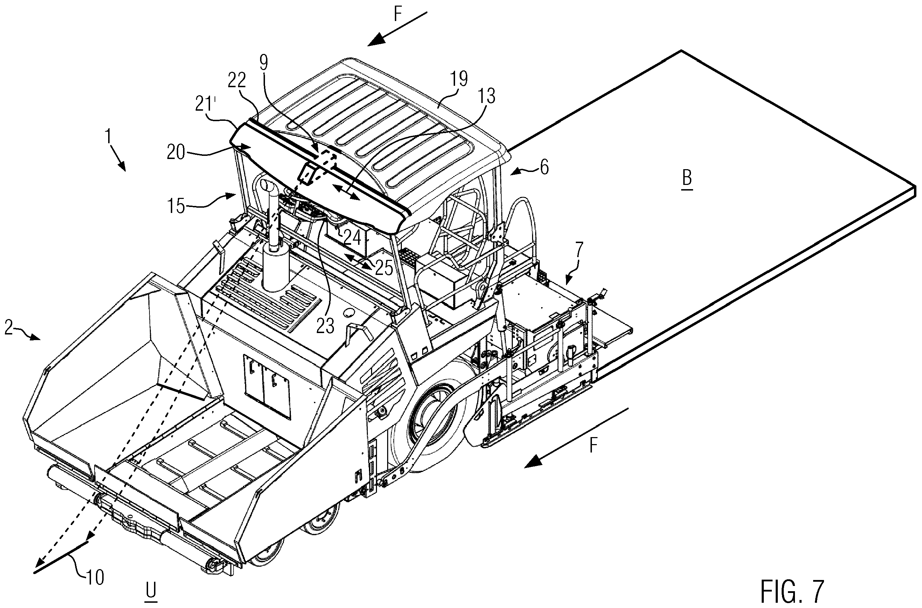

Fig. 7 zeigt eine weitere Ausführungsvariante des Straßenfertigers 1. In Fig. 7 ist ein seitlich verschiebbarer Projektor 9 im Schutzdach 19 des Straßenfertigers 1 verbaut. Der Projektor 9 ist gemäß Fig. 7 auf einer Führungsbahn 22 montiert und darauf quer entlang des Pfeils 13 im Schutzdach 19 verschiebbar gelagert. Das Schutzdach 19 weist vorzugsweise über die gesamte Breite der Vorderseite 20 ein lichtdurchlässiges Fenster 21' auf, durch welches die Lichtstrahlen zur Erzeugung der Projizierung 10 auf den Untergrund U vor den Gutbunker 2 gerichtet werden können. Der Projektor 9 lässt sich insbesondere vom Bedienstand 6 aus vom Fahrer entlang der Fahrbahn 22 verstellen. Dabei kann der Fahrer die Position des Projektors 9 anhand einer Bedienkonsole 23 einstellen, die ihm auf dem Bedienstand 6 zur Verfügung steht.

Der Straßenfertiger 1 aus Fig. 7 umfasst weiterhin einen Fahrersitz 24. Der Fahrersitz 24 ist hinter der Bedienkonsole 23 auf dem Bedienstand 6 angeordnet. In Fig. 7 zeigt ein Pfeil 25, dass der Fahrersitz 24 und/oder die Bedienkonsole 23 auf dem Bedienstand 6 quer verschiebbar gelagert sind. Insbesondere können der Fahrersitz 24 sowie die Bedienkonsole 23 gemeinsam auf dem Bedienstand 6 querverschoben werden. Gemäß einer besonderen Ausführungsvariante kann der Projektor 9 aus Fig. 7 derart konfiguriert sein, dass er sich automatisch entlang der Fahrbahn 22 in Abhängigkeit der Position des darunter im Bedienstand 6 angeordneten Fahrersitzes 24 und/oder der Bedienkonsole 23 verstellt. Damit wird erreicht, dass der Projektor 9 aus Fig. 7 eine Position oberhalb des Fahrers auf dem Bedienstand 6 beibehält, so dass die Projizierung 10 vom Projektor 9 stets auf dem Untergrund U in Einbaurichtung F gesehen vor dem Fahrer abgebildet ist. Alternativ zur automatischen Verstellbarkeit des Projektors 9 entlang der Fahrbahn 22 könnte dieser auch manuell verstellbar sein.

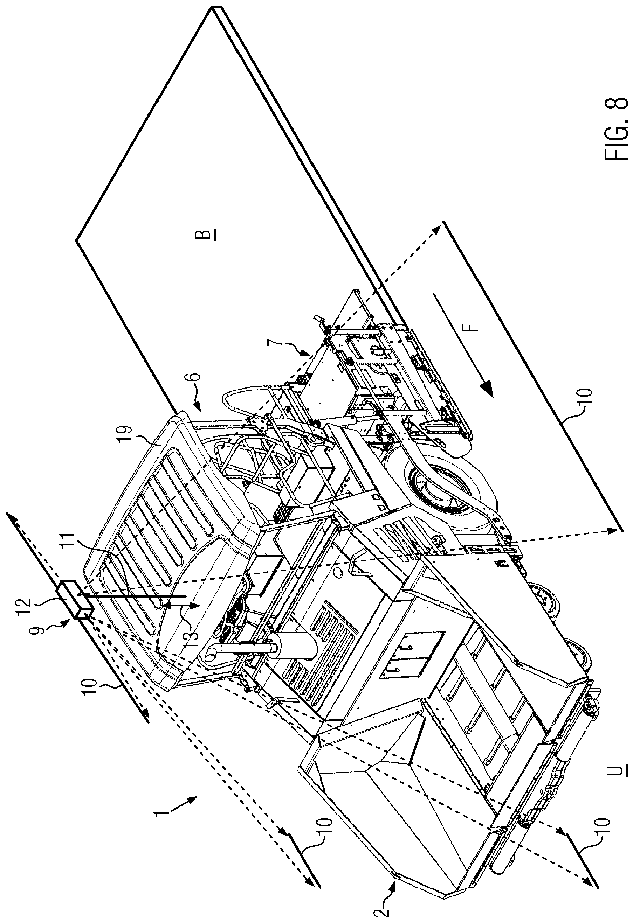

Fig. 8 zeigt eine weitere Ausführungsvariante eines Straßenfertigers 1. In Fig. 8 ist die Lichtquelle 12 des Projektors 9 oberhalb des Schutzdaches 19 angeordnet. Fig. 8 zeigt weiter, dass von der Lichtquelle 12 mehrere Projizierungen 10 sowohl seitlich des Straßenfertigers 1, als auch vor dem Straßenfertiger 1 auf dem Untergrund U abgebildet sind. Die Lichtquelle 12 des Projektors 9 wird von der Halterung 11 getragen, die auf dem Schutzdach 19 befestigt ist. Gemäß Fig. 8 kann die Halterung 11 als Teleskopstange ausgebildet sein, um die Höhe der Lichtquelle 12 relativ zum Schutzdach 19 variieren zu können.

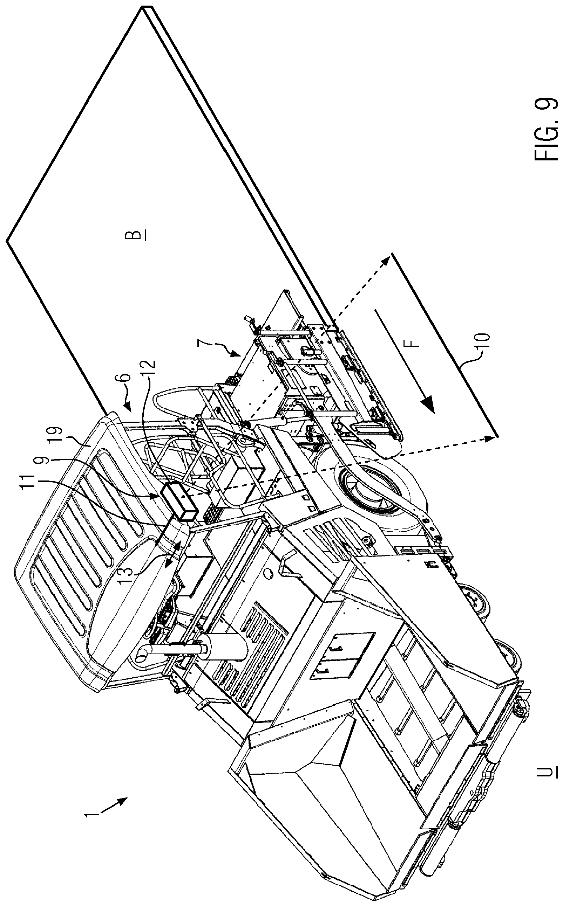

Fig. 9 zeigt eine weitere Ausführungsvariante eines Straßenfertigers 1. In Fig. 9 ist der Projektor 9 seitlich am Schutzdach 19 angeordnet. Der Projektor 9 ist mittels der Halterung 11 seitwärts entlang des Pfeils 13 verschiebbar am Schutzdach 19 befestigt. Obwohl der Projektor 9 bei dieser Ausführungsvariante seitwärts auskragend positionierbar ist, behindert er in dieser Höhenlage nicht die Arbeit seitlich des Straßenfertigers.

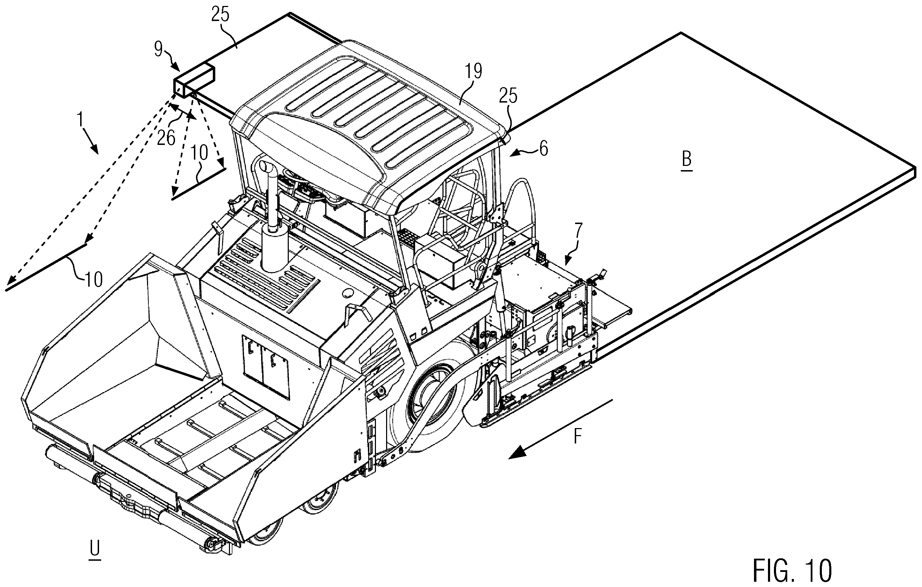

Fig. 10 zeigt eine weitere Ausführungsform eines Straßenfertigers 1. In Fig. 10 umfasst das Schutzdach 19 ein Ausziehdach 25, das quer zur Einbaurichtung F gesehen seitwärts entlang eines Pfeils 26 ausfahrbar ist. Gemäß Fig. 10 ist der Projektor 9 an einem vorderen äußeren Ende des Ausziehdachs 25 angeordnet. Der Projektor 9 ist vorzugsweise im Ausziehdach 25 integral verbaut und kann durch seinen Verbau im Ausziehdach 25 vor Schlechtwettereinflüssen geschützt werden.

Das Ausziehdach 25 dient gemäß Fig. 10 für den Projektor 9 als Halterung und bestimmt, wie weit der Projektor 9 seitlich vom Schutzdach 19 beabstandet wird. Vom Ausziehdach 25 aus kann der Projektor 9 derart oberhalb des Untergrunds U positioniert werden, dass die jeweiligen Projizierungen 10 gut sichtbar neben dem Straßenfertiger 1 auf dem Untergrund U darstellbar sind. Bei der Ausführungsvariante in Fig. 10 können beide Ausziehdächer 25 den Projektor 9 integral verbaut haben.

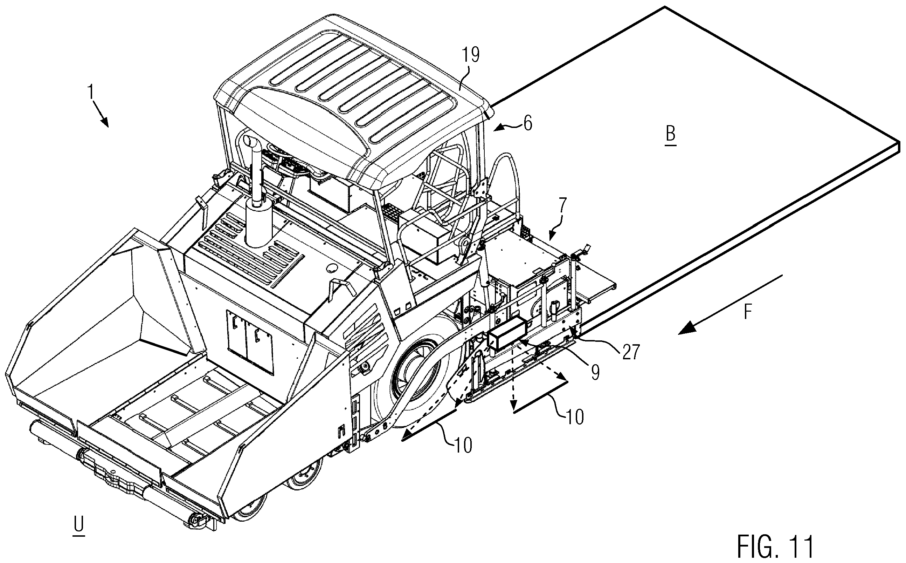

Fig. 11 zeigt eine weitere Ausführungsform eines Straßenfertigers 1. In Fig. 11 ist der Projektor 9 an der Einbaubohle 7 angeordnet. Fig. 11 zeigt, dass der Projektor 9 an einem Seitenschieber 27 der Einbaubohle 7 befestigt ist. Vom Projektor 9 aus kann die Projizierung 10 seitlich des Seitenschiebers 27 und/oder vor den Seitenschieber 27, erfindungsgemäß fluchtend zum Seitenschieber 27 auf dem Untergrund U abgebildet werden.

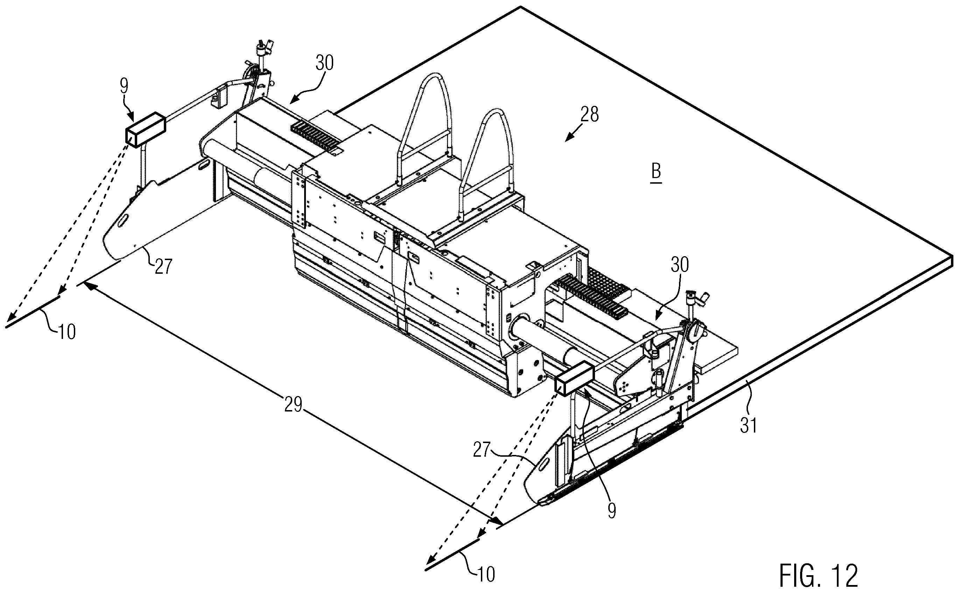

Fig. 12 zeigt die Einbaubohle 7 aus Fig. 11 in einer besonderen Ausführungsvariante. Gemäß Fig. 12 ist die Einbaubohle 7 als Ausziehbohle 28 konfiguriert. Die Ausziehbohle 28 ermöglicht eine variierbare Einbaubreite 29 für die neue Straßenbelagschicht B. Dafür umfasst die Ausziehbohle 28 hydraulisch verstellbare Ausziehteile 30, die quer zur Einbaurichtung F entsprechend der gewünschten Einbaubreite 29 seitwärts verstellbar sind. Außen an den jeweiligen Ausziehteilen 30 sind die Seitenschieber 27 befestigt, die vor allem dafür sorgen, dass eine saubere Abschlusskante 31 im neuen Straßenbelag B herstellbar ist.

Gemäß Fig. 12 sind die jeweiligen Projektoren 9 derart an den beiden Seitenschiebern 27 angeordnet, dass die jeweiligen Projizierungen 10 mit den beiden Seitenschiebern 27 erfindungsgemäß fluchtend auf dem Untergrund U abgebildet werden können. Die Ausführungsvariante gemäß Fig. 12 hat den Vorteil, dass die jeweiligen Projizierungen 10 durch ein Verstellen der Ausziehteile 30 dementsprechend neu auf dem Untergrund U ausgerichtet werden, d.h. der Einstellung der Ausziehbohle 28 automatisch folgen.

Die mit den jeweiligen Seitenschiebern 27 fluchtenden, auf dem Untergrund U dargestellten Projizierungen 10 bilden für den Fahrer des Straßenfertigers 1 eine visuelle Verlängerung der Seitenschieber 27 auf dem Untergrund U, so dass er hinsichtlich der Projizierungen 10 besser eine Orientierung/Ausrichtung des Straßenfertigers 1 bezüglich der Einbaurichtung F einschätzen kann. Insbesondere kann der Fahrer anhand der fluchtenden Linien erkennen, wohin bei aktueller Lenkung des Straßenfertigers 1 der neue Straßenbelag B ausgelegt wird.

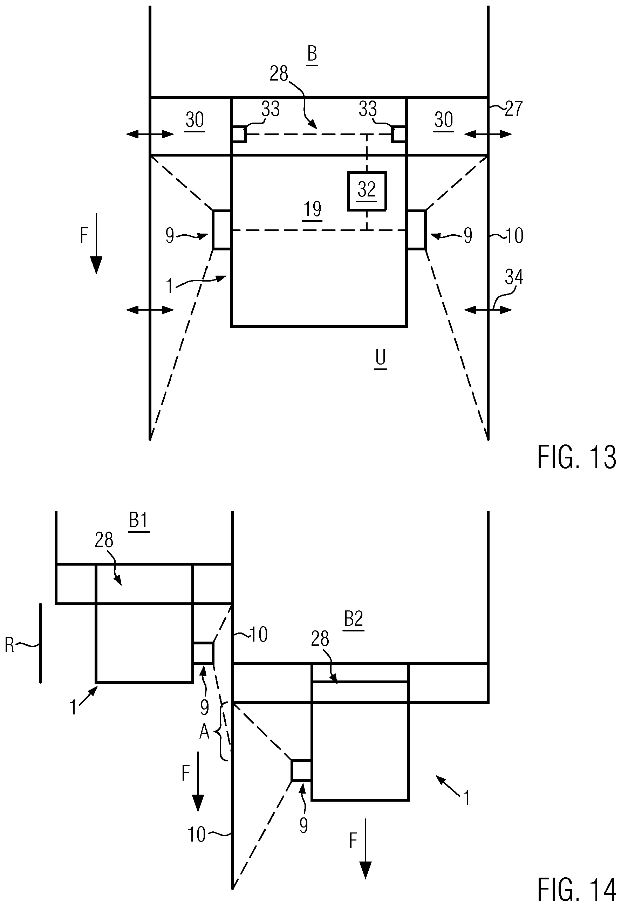

Fig. 13 zeigt eine schematische horizontale Projizierung (Draufsicht) des erfindungsgemäßen Straßenfertigers 1. Bei dieser Ausführungsvariante ist der Projektor 9 seitlich am Schutzdach 19 befestigt und dazu konfiguriert, die Projizierung 10 in Abhängigkeit von einer Positionierung der Ausziehteile 30 auf dem Untergrund U abzubilden.

Dafür zeigt Fig. 13 in schematischer Darstellung, dass der Straßenfertiger 1 eine Steuereinheit 33 aufweist, die mit einer Sensoreinheit 33 sowie mit dem Projektor 9 funktional verbunden ist. Die Sensoreinheit 33 ist dazu konfiguriert, eine Position der Ausziehteile 30 zu erfassen und an die Steuereinheit 33 weiter zu leiten. Basierend auf der Positionierung der jeweiligen Ausziehteile 30 kann die Steuereinheit 32 den Projektor 9 derart anzusteuern, dass die von ihm auf den Untergrund U dargestellten Projizierungen 10 mit den jeweiligen Seitenschiebern 27 fluchten. Die Ausführungsvariante aus Fig. 13 ist somit dazu in der Lage, die Projizierungen 10 in Abhängigkeit von der Position der Seitenschieber 27 auf dem Untergrund U abzubilden, wobei eine seitwärts entlang des Pfeils 34 durchgeführte Verstellung der Projizierungen 10 automatisch synchron zu einer Verstellung der Ausziehteile 30 stattfinden kann. Die Ausführungsvariante aus Fig. 13 bietet den Vorteil, dass am Straßenfertiger 1 unterschiedliche Ausziehbohlentypen zusammen mit den Projektoren 9 verwendbar sind.

In Fig. 14 wird gezeigt, wie zwei Straßenfertiger 1 Bahn an Bahn neue Straßenbeläge B1 und B2 nebeneinander verbauen. Fig. 14 zeigt, dass die Projizierungen 10 von den jeweiligen Projektoren 9 der Straßenfertiger 1 miteinander fluchten, insbesondere entlang eines Abschnitts A miteinander überlappend abbildbar sind. Die auf dem Untergrund U erzeugte Linienführung mittels der fluchtenden Projizierungen 10 gestattet den jeweiligen Fahrern der Straßenfertiger 1 eine genaue Zielführung entlang der Einbaurichtung F.

Bei der Ausführungsvariante gemäß Fig. 14 kann einer beiden Straßenfertiger 1 angesichts einer Referenz, beispielsweise angesichts einer Richtschnur R, gelenkt werden. In Figur 14 ist das der den Straßenbelag B1 verbauende Straßenfertiger 1. Dieser Straßenfertiger 1 gibt daher die Einbaurichtung F für den anderen Straßenfertiger 1 vor und gilt als Referenzgeber für den daneben einbauenden Straßenfertiger 1. Die Projizierungen ermöglichen es, dass die beiden Straßenfertiger 1 parallel nebeneinander fahren.

Fig. 15 zeigt eine weitere schematische Darstellung in Draufsicht des erfindungsgemäßen Straßenfertigers 1. Insbesondere zeigt Fig. 15, dass die Projizierungen 10 auf dem Untergrund U nicht nur für den Fahrer des Straßenfertigers 1 eine optische Navigationshilfe darstellen, sondern auch für den Fahrer eines vorausfahrenden Materiallieferfahrzeugs 34, beispielsweise eines Beschickers oder eines LKWs, welches vor dem Gutbunker 2 des Straßenfertigers 1 herfährt. Dabei bieten die Projizierungen 10 eine Navigationshilfe für den LKW-Fahrer, wenn dieser den LKW rückwärts gegen die Schubvorrichtung 4 (siehe Fig. 2) an den Straßenfertiger 1 heranfährt. Die Projizierungen 10 spannen in Fig. 15 ein Positionsfeld 35 auf, innerhalb welchem das Materiallieferfahrzeug 34 navigieren sollte, um eine ordnungsgemäße Materialübergabe an den Straßenfertiger 1 zu leisten.

Fig. 16 zeigt eine weitere schematische Draufsicht eines Straßenfertigers 1. In Fig. 16 sind die jeweiligen Projektoren 9, wie der Projektor 9 aus Fig. 9, am Schutzdach 19 des Straßenfertigers 1 befestigt. Der Straßenfertiger 1 der Fig. 16 ist mit der Ausziehbohle 28 ausgestattet. Die Projektoren 9 können quer zur Einbaurichtung F seitwärts verstellt werden, so dass die Projizierungen 10 von der jeweiligen Lichtquelle 12 senkrecht auf den Untergrund U abbildbar sind. Wie in der Fig. 13 können bei dem Straßenfertiger 1 aus Fig. 16 die Projizierungen 10 erfindungsgemäß mit den Seitenschiebern 27 der Ausziehteile 30 fluchtend eingestellt werden.

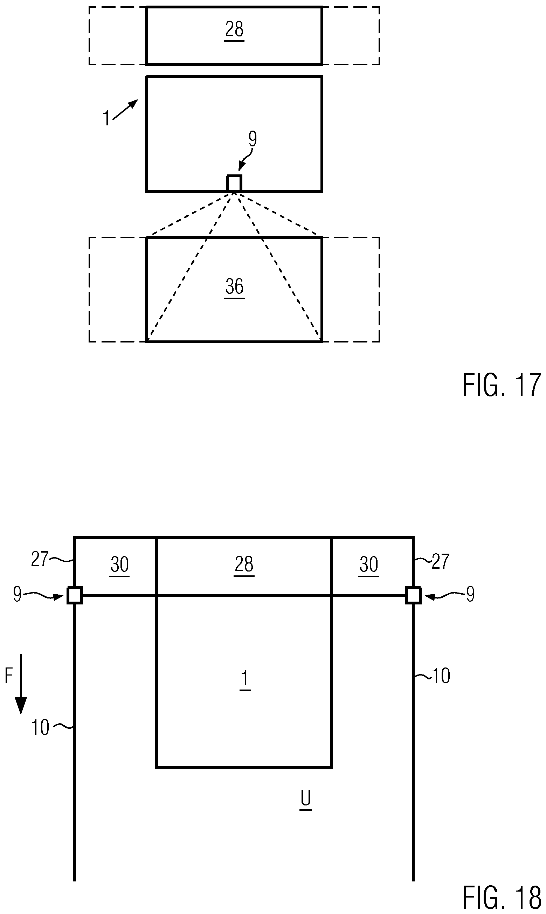

Fig. 17 zeigt eine weitere schematische Draufsicht eines Straßenfertigers 1. In Fig. 17 ist der Straßenfertiger 1 mit der Ausziehbohle 28 ausgestattet. Der Projektor 9 ist in Fig. 17 gemäß der Ausführungsvariante aus Fig. 7 oder 8 auf dem Schutzdach 19 angeordnet. Der Projektor 9 aus Fig. 17 ist dazu konfiguriert, vor den Straßenfertiger 1 in Einbaurichtung F gesehen, auf den Untergrund ein Orientierungsfeld 36 zu projizieren. Fig. 17 zeigt, dass das Orientierungsfeld 36 in der Breite an die Einbaubreite der Ausziehbohle 28 anpassbar ist. Das Orientierungsfeld 36 stellt für den Fahrer des Straßenfertigers eine visuelle Verlängerung des Straßenfertigers auf dem Untergrund U dar, so dass er die Ausrichtung des Straßenfertigers 1 hinsichtlich einer Referenz bzw. der Umgebung besser einschätzen kann.

Fig. 18 zeigt eine weitere schematische Draufsicht des erfindungsgemäßen Straßenfertigers 1. In Fig. 18 sind die Projektoren 9, wie bei der Fig. 12, an den Ausziehteilen 30 der Ausziehbohle 28, vornehmlich an den jeweiligen Seitenschiebern 27 befestigt. Anhand Fig. 18 kann man gut erkennen, dass die jeweiligen Projizierungen 10 eine visuelle Verlängerung der Seitenschieber 27 entlang der Einbaurichtung F darstellen. Die optisch für den Fahrer des Straßenfertigers 1 auf dem Untergrund U sichtbar abgebildeten Projizierungen 10 geben dem Fahrer eine Navigationshilfe, die insbesondere während des Einbaumodus ein verbessertes Navigieren des Straßenfertigers 1 ermöglicht. Hinzu kommt, dass die Projizierungen 10 auch für anderes Bedienpersonal entlang der Einbaustrecke sichtbar sind. Für das andere Bedienpersonal stellen die Projizierungen 10 Warnlichtschranken dar, die einen Gefahrenbereich um den Straßenfertiger 1 begrenzen.

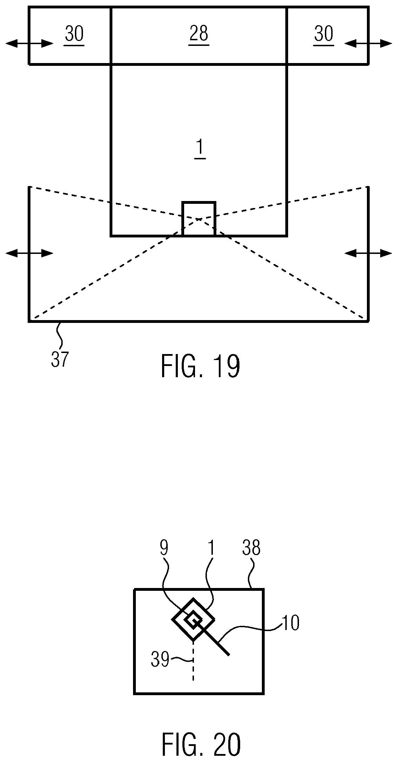

Fig. 19 zeigt eine weitere schematische Draufsicht des erfindungsgemäßen Straßenfertigers 1. Beim Straßenfertiger 1 aus Fig. 19 ist der Projektor auf dem Schutzdach 19 wie in den Figuren 7 oder 8 angeordnet. Der Projektor 9 aus Fig. 19 ist dazu ausgebildet, in Bereichen seitlich sowie vor dem Straßenfertiger 1 einen Lichtrahmen 36 auf dem Untergrund U abzubilden, dessen seitliche Linienführung insbesondere hinsichtlich der Ausziehteile 30 der Ausziehbohle 28 anpassbar sind. Anhand des Lichtrahmens 36 kann der Fahrer des Straßenfertigers 1 gut navigieren und den Straßenfertiger 1 entlang der vorbestimmten Einbaurichtung F, insbesondere hinsichtlich einer gegebenen Referenz, lenken.

Fig. 20 zeigt in schematischer Darstellung eine Displayeinheit 38, die auf dem Bedienstand 6 des Straßenfertigers 1 dem Fahrer zur Verfügung steht. In Fig. 20 ist auf der Displayeinheit 38 visuell der Straßenfertiger 1 bezüglich der Projizierung 10 dargestellt, die eine momentane Ausrichtung des Straßenfertigers 1 auf dem Untergrund U darstellt. Fig. 20 zeigt weiter eine Sollausrichtung 39, entlang welcher der Straßenfertiger 1 ausgerichtet sein sollte, um den neuen Straßenbelag B entlang der vorbestimmten Einbaurichtung F einzuhalten. In Fig. 20 zeigt die momentane Ausrichtung (Projizierung 10) des Straßenfertigers 1 nicht in die gewünschte Einbaurichtung F (Sollausrichtung 39). In dieser Situation muss der Fahrer des Straßenfertigers 1 gegenlenken, um die Projizierung 10 auf die Sollausrichtung 39 zu verlagern. Dem Gegenlenken kann er auf der Displayeinheit 38 folgen. Sobald die Projizierung 10 auf die Sollausrichtung 39 auf der Displayeinheit 38 fällt, hat der Straßenfertiger 1 die vorbestimmte Einbaurichtung F erreicht und kann in dieser Richtung den Einbau fortsetzen. Eine zusätzliche Navigierungshilfe könnte dem Fahrer dadurch mittels der Displayeinheit 38 geboten werden, wenn bei differierenden Ausrichtungen der Projizierung 10 und der Sollausrichtung 39 beide Linien rot auf der Displayeinheit 38 dargestellt sind und beide Linien grün werden, sobald die Projizierung 10 auf die Sollausrichtung 39 fällt.

## Patentansprüche

1. Straßenfertiger (1), umfassend einen Gutbunker (2) zur Aufnahme eines Einbaumaterials (M), ein Chassis (3), einen Bedienstand (6), der in Einbaurichtung (F) gesehen hinter dem Gutbunker (2) angeordnet ist, eine nivellierbare Einbaubohle (7) zum Verbau des Einbaumaterials (M) auf einem Untergrund (U), eine Materialfördereinheit (8), die dazu konfiguriert ist, das Einbaumaterial (M) vom Gutbunker (2) zur Einbaubohle (7) zu transportieren, sowie mindestens einen optischen Projektor (9), der dazu konfiguriert ist, auf dem Untergrund (U) in Einbaurichtung (F) gesehen derart seitlich und/oder vor das Chassis (3) des Straßenfertigers (1) mindestens eine Projizierung (10) im sichtbaren Spektrum zu erzeugen, dass die Projizierung (10) vom Bedienstand (6) aus in Einbaurichtung (F) gesehen als Navigationshilfe von einem Fahrer des Straßenfertigers (1) einsehbar ist, wobei der Projektor (9) manuell und/oder automatisch ausrichtbar ist, um die Projizierung (10) bezüglich einer gewünschten Referenz (R) einzustellen, sodass die Projizierung (10) dem Fahrer als visuelle Navigierungshilfe dient, um entlang einer gewünschten Einbaustrecke in Einbaurichtung (F) zu navigieren, **dadurch gekennzeichnet, dass** die Projizierung (10) eine Führungslinie ist, die mit einem Seitenschieber (27) der Einbaubohle (7) als Referenz (R) in Einbaurichtung (F) fluchtet, um dem Fahrer als visuelle Verlängerung des Seitenschiebers (27) anzuzeigen, wohin die neue Fahrbahn verlegt wird, wenn er die Fahrtrichtung beibehält.

2. Straßenfertiger nach Anspruch 1, **dadurch gekennzeichnet, dass** der Projektor (9) am Chassis (3), an einem Andruckbalken (4), am Bedienstand (6), an einem Dachaufbau (15), an einem Schutzdach (19), an einem Ausziehdach (25), an einem Rückspiegel (14), auf einer Motorhaube (18), in oder an einer Einweiseampel (17), an einem Seitenschieber (27) und/oder an der Einbaubohle (7) des Straßenfertigers (1) angeordnet ist.

3. Straßenfertiger nach einem der vorangehenden Ansprüche, **dadurch gekennzeichnet, dass** die Einbaubohle (7) eine Ausziehbohle (28) mit seitlich verstellbaren Ausziehteilen (30) ist, wobei der Projektor (9) an einem Ausziehteil (30), insbesondere an dessen Seitenschieber (27) befestigt ist.

4. Straßenfertiger nach einem der vorangehenden Ansprüche, **dadurch gekennzeichnet, dass** der Straßenfertiger (1) eine Steuereinrichtung (32) umfasst, die dazu konfiguriert ist, die Projizierung (10) synchron zur Einbaubreite (29) zu verstellen.

5. Straßenfertiger nach einem der vorangehenden Ansprüche, **dadurch gekennzeichnet, dass** der Straßenfertiger (1) einen quer zur Einbaurichtung (F) verschiebbar gelagerten Fahrersitz (24) auf dem Bedienstand (6) umfasst, wobei der Projektor (9) an einem Schutzdach (19) des Straßenfertigers (1) befestigt ist und entlang einer daran ausgebildeten Führungsbahn (22) manuell und/oder automatisch oberhalb einer Position des Fahrersitzes (24) positionierbar ist.

6. Straßenfertiger nach einem der vorangehenden Ansprüche, **dadurch gekennzeichnet, dass** der Projektor (3) dazu konfiguriert ist, als Projizierung (10) ein lineares Orientierungsfeld (36) auf dem Untergrund (U) vor dem Gutbunker (2) zu erzeugen und/oder dazu konfiguriert ist, eine Breite des Orientierungsfelds (36) manuell und/oder automatisch anzupassen.

7. Straßenfertiger nach einem der vorangehenden Ansprüche, **dadurch gekennzeichnet, dass** der Straßenfertiger (1) eine Displayeinheit (38) umfasst, die dazu konfiguriert ist, eine horizontale Projektion des Straßenfertigers (1), einschließlich der Projizierung (10) relativ zu einer Sollausrichtung (39) anzuzeigen.

8. Straßenfertiger nach einem der vorangehenden Ansprüche, **dadurch gekennzeichnet, dass** der Straßenfertiger (1) auf jeder Seite einen Projektor (9) aufweist.

9. Straßenfertiger nach einem der vorangehenden Ansprüche, **dadurch gekennzeichnet, dass** der Projektor (9) bei einem Wechsel zwischen einem Einbau- und einem Transportmodus des Straßenfertigers (1) automatisch an- und ausschaltbar ist.

10. Straßenfertiger nach einem der vorangehenden Ansprüche, **dadurch gekennzeichnet, dass** der Projektor (9) mindestens einen Linienlaser, einen Kreuzlinienlaser, eine LED-Einheit, eine Lichteinheit mit einer Fokussierlinse und/oder eine Lichteinheit mit einer zu projizierenden Markierung umfasst.

11. Straßenfertiger nach einem der vorangehenden Ansprüche, **dadurch gekennzeichnet, dass** eine Farbe der Projizierung (10) manuell und/oder automatisch einstellbar ist.

12. Straßenfertiger nach einem der vorangehenden Ansprüche, **dadurch gekennzeichnet, dass** der Projektor (9) in einem vorbestimmten Winkel, insbesondere vertikal auf den Untergrund (U) gerichtet ist, sodass die Projizierung (10) im Wesentlichen orthogonal auf den Untergrund (U) fällt.

13. Straßenfertiger nach einem der vorangehenden Ansprüche, **dadurch gekennzeichnet, dass** der Projektor als gepulste Lichtquelle ausgebildet ist und/oder eine Lichtintensität des Projektors einstellbar ist.

## Claims

1. Road paver (1), comprising a material hopper (2) for receiving a paving material (M), a chassis (3), an operator stand (6) which is arranged behind the material hopper (2) when seen in the paving direction (F), a levelable paving screed (7) for placing the paving material (M) on a subgrade (U), a material conveying unit (8) configured to transport the paving material (M) from the material hopper (2) to the paving screed (7), and at least one optical projector (9) which is configured to generate at least one projection (10) in the visible spectrum on the subgrade (U) laterally and/or in front of the chassis (3) of the road paver (1) when viewed in the paving direction (F), the projection (10) being visible to a driver of the road paver (1) from the operator stand (6) in the paving direction (F) as a navigation aid,
wherein the projector (9) is manually and/or automatically adjustable to align the projection (10) with respect to a desirable reference (R) so that for the driver the projection (10) serves as visual navigation aid to follow a predetermined paving direction (F) during a paving run,
**characterized in that** the projection (10) being a guideline aligned with a side shifting device (27) of the paving screed (7) as reference (R) in the paving direction (F), in order to show to the driver as a visual extension of the side shifting device (27) in which direction the new pavement is laid, when the paving direction is maintained.

2. Road paver according to claim 1, **characterized in that** the projector (9) is arranged on the chassis (3), on a pressure beam (4), on the operator stand (6), on a roof structure (15), on a protective roof (19), on an extendable roof (25), on a rear-view mirror (14), on a bonnet (18), in or on an instruction light (17), on a side shifting device (27) and/or on the paving screed (7) of the road paver (1).

3. Road paver according to one of the preceding claims, **characterized in that** the paving screed (7) is an extending screed (28) with laterally adjustable extendable units (30), the projector (9) being fastened to an extendable unit (30), in particular to a side shifting device (27) thereof.

4. Road paver according to one of the preceding claims, **characterized in that** the road paver (1) comprises control means (32) configured to adjust the projection (10) synchronously with the pave width (29).

5. Road paver according to one of the preceding claims, **characterized in that** the road paver (1) comprises a driver's seat (24) mounted as to be displaceable transversely to the paving direction (F) on the operator stand (6), the projector (9) being fastened to a protective roof (19) of the road paver (1) and being positionable manually and/or automatically above a position of the driver's seat (24) along a guideway (22) formed thereon.

6. Road paver according to one of the preceding claims, **characterized in that** the projector (3) is configured to generate as projection (10) a linear orientation field (36) on the subgrade (U) in front of the material hopper (2) and/or to manually and/or automatically adjust a width of the orientation field (36).

7. Road paver according to one of the preceding claims, **characterized in that** the road paver (1) comprises a display unit (38) configured to display a horizontal projection of the road paver (1), including the projection (10) relative to a target orientation (39).

8. Road paver according to one of the preceding claims, **characterized in that** the road paver (1) has a projector (9) on each side.

9. Road paver according to one of the preceding claims, **characterized in that** the projector (9) can be automatically switched on and off when changing between a paving mode and a transport mode of the road paver (1).

10. Road paver according to one of the preceding claims, **characterized in that** the projector (9) comprises at least one line laser, a cross-line laser, an LED unit, a light unit with a focusing lens and/or a light unit with a marking to be projected.

11. Road paver according to one of the preceding claims, **characterized in that** a colour of the projection (10) is manually and/or automatically adjustable.

12. Road paver according to one of the preceding claims, **characterized in that** the projector (9) is directed at a predetermined angle, in particular vertically onto the subgrade (U), so that the projection (10) falls substantially orthogonally onto the subgrade (U).

13. Road paver according to one of the preceding claims, **characterized in that** the projector is constructed as a pulsed light source and/or a light intensity of the projector is adjustable.

## Revendications

1. Finisseur de route (1) comprenant une trémie à matériau (2) destinée à recevoir un matériau de revêtement à poser (M), un châssis (3), un poste de commande de service (6), qui est agencé derrière la trémie à matériau (2) en se référant à la direction de marche (F) de pose de revêtement, une table lisseuse de pose (7) pouvant être nivelée et destinée à la pose du matériau de revêtement à poser (M) sur une plateforme de sol (U), une unité de transport de matériau (8), qui est configurée pour transporter le matériau de revêtement à poser (M) de la trémie à matériau (2) vers la table lisseuse de pose (7), ainsi qu'au moins un projecteur optique (9), qui est configuré pour produire sur la plateforme de sol (U), latéralement et/ou devant le châssis (3) du finisseur de route (1) en se référant à la direction de marche (F) de pose de revêtement, au moins une projection (10) dans le spectre visible, de façon telle que la projection (10) soit visible par un conducteur du finisseur de route (1) à partir du poste de commande de service (6) dans la direction de marche (F) de pose de revêtement, en tant qu'aide à la navigation, finisseur de route
dans lequel le projecteur (9) peut être orienté manuellement et/ou de manière automatique en vue de régler la projection (10) par rapport à une référence (R) souhaitée, de sorte que la projection (10) sert d'aide visuelle à la navigation pour assurer une navigation dans la direction de marche (F) de pose de revêtement, le long d'un parcours de pose de revêtement souhaité,
**caractérisé en ce que** la projection (10) est une ligne de guidage, qui est alignée avec une glissière latérale (27) de la table lisseuse de pose (7) en tant que référence (R), dans la direction de marche (F) de pose de revêtement, pour indiquer au conducteur, comme prolongement visuel du coulisseau latéral (27), où va s'effectuer la pose de la nouvelle chaussée, lorsqu'il maintient la direction de marche.

2. Finisseur de route selon la revendication 1, **caractérisé en ce que** le projecteur (9) est agencé sur le châssis (3), sur une poutre d'appui (4), sur le poste de commande de service (6), sur une structure de montage de toit (15), sur un toit de protection (19), sur un toit extractible (25), sur un rétroviseur (14), sur un capot de moteur (18), dans ou sur un feu de signalement (17), sur une glissière latérale (27) et/ou sur la table lisseuse de pose (7) du finisseur de route (1).

3. Finisseur de route selon l'une des revendications précédentes, **caractérisé en ce que** la table lisseuse de pose (7) est une table extensible (28) avec des parties extractibles (30) réglables latéralement, le projecteur (9) étant fixé sur une partie extractible (30), notamment sur sa glissière latérale (27).

4. Finisseur de route selon l'une des revendications précédentes, **caractérisé en ce que** le finisseur de route (1) comprend un dispositif de commande (32), qui est configuré pour déplacer la projection (10) de manière synchronisée avec la largeur de pose de revêtement (29).

5. Finisseur de route selon l'une des revendications précédentes, **caractérisé en ce que** le finisseur de route (1) comprend un siège de conducteur (24) monté de manière à pouvoir coulisser transversalement à la direction de marche (F) de pose de revêtement sur le poste de commande de service (6), le projecteur (9) étant fixé sur un toit de protection (19) du finisseur de route (1), et pouvant être positionné de manière manuelle et/ou automatique le long d'une glissière de guidage (22) réalisée sur ledit toit, au-dessus d'une position du siège de conducteur (24).

6. Finisseur de route selon l'une des revendications précédentes, **caractérisé en ce que** le projecteur (9) est configuré pour produire, en guise de projection (10), un champ d'orientation (36) linéaire sur la plateforme de sol (U) devant la trémie à matériau (2), et/ou est configuré pour adapter de manière manuelle et/ou automatique, une largeur du champ d'orientation (36).

7. Finisseur de route selon l'une des revendications précédentes, **caractérisé en ce que** le finisseur de route (1) comporte une unité d'écran de visualisation (38), qui est configurée pour visualiser une projection horizontale du finisseur de route (1), y compris la projection (10), par rapport à une orientation de consigne (39).

8. Finisseur de route selon l'une des revendications précédentes, **caractérisé en ce que** le finisseur de route (1) comporte un projecteur (9) sur chaque côté.

9. Finisseur de route selon l'une des revendications précédentes, **caractérisé en ce que** le projecteur (9), lors d'un passage d'un mode de pose de revêtement à un mode de transport du finisseur de route (1), peut être automatiquement mis en marche ou arrêté.

10. Finisseur de route selon l'une des revendications précédentes, **caractérisé en ce que** le projecteur (9) comprend au moins un laser à ligne, un laser à lignes croisées, une unité à LED, une unité d'éclairage avec une lentille de focalisation et/ou une unité d'éclairage avec une marque à projeter.

11. Finisseur de route selon l'une des revendications précédentes, **caractérisé en ce qu'**une couleur de la projection (10) peut être réglée de manière manuelle et/ou automatique.

12. Finisseur de route selon l'une des revendications précédentes, **caractérisé en ce que** le projecteur (9) est dirigé selon un angle prédéterminé, notamment de manière verticale, sur la plateforme de sol (U), de sorte que la projection (10) tombe sensiblement de manière orthogonale sur la plateforme de sol (U).

13. Finisseur de route selon l'une des revendications précédentes, **caractérisé en ce que** le projecteur est réalisé en tant que source de lumière puisée et/ou qu'une intensité de lumière du projecteur est réglable.
